# EUROPEAN PATENT SPECIFICATION

(11) **EP 0 600 686 B1**
(45) Date of publication and mention of the grant of the patent: **18.07.2001**
(21) Application number: 93309475.7
(22) Date of filing: 29.11.1993
(51) Int. Cl.: C10G 11/05

(54) **Fluid catalytic cracking process for producing light olefins**
Verfahren zum Fluidbedcracken zur Herstellung von Olefinen
Procédé en craquage catalytique en lit fluidité pour la production d'oléfines

(30) Priority: 30.11.1992 US 982920
(43) Date of publication of application: 08.06.1994
(73) Proprietor: ExxonMobil Research and Engineering Company, Annandale, New Jersey 08801 (US)
(72) Inventor: Eberly, Paul Earl, Jr., Baton Rouge, LA 70815 (US); Winter, William Edward, Jr., Baton Rouge, LA 70816 (US)
(74) Representative: Dew, Melvyn John

(56) References cited:
- US-A- 3 856 659
- US-A- 4 865 718

## Description

The present invention relates to a fluid catalytic cracking process for producing light olefins and low emissions fuels products, more especially propylene, butylene, and exceptionally high levels of ethylene.

Catalytic cracking is an established and widely used process in the petroleum refining industry for converting petroleum oils of relatively high boiling point to more valuable lower boiling products, including gasoline and middle distillates, such as kerosene, jet fuel and heating oil. The pre-eminent catalytic cracking process now in use is the fluid catalytic cracking process (FCC) in which a pre-heated feed is brought into contact with a hot cracking catalyst which is in the form of a fine powder, typically having a particle size of about 10-300 microns, usually about 100 microns, for the desired cracking reactions to take place. During the cracking , coke and hydrocarbonaceous material are deposited on the catalyst particles. This results in a loss of catalyst activity and selectivity. The coked catalyst particles, and associated hydrocarbon material, are subjected to a stripping process, usually with steam, to remove as much of the hydrocarbon material as technically and economically feasible. The stripped particles containing non-strippable coke, are removed from the stripper and sent to a regenerator where the coked catalyst particles are regenerated by being contacted with air, or a mixture of air and oxygen, at an elevated temperature. This results in the combustion of the coke which is a strongly exothermic reaction which, besides removing the coke, serves to heat the catalyst to the temperatures appropriate for the endothermic cracking reaction. The process is carried out in an integrated unit comprising the cracking reactor, the stripper, the regenerator, and the appropriate ancillary equipment. The catalyst is continuously circulated from the reactor or reaction zone, to the stripper and then to the regenerator and back to the reactor. The circulation rate is typically adjusted relative to the feed rate of the oil to maintain a heat balanced operation in which the heat produced in the regenerator is sufficient for maintaining the cracking reaction with the circulating regenerated catalyst being used as the heat transfer medium. Typical fluid catalytic cracking processes are described in the monograph Fluid Catalytic Cracking with Zeolite Catalysts, Venuto, P.B. and Habib, E. T., Marcel Dekker Inc. N.Y. 1979. As described in this monograph, catalysts which are conventionally used are based on zeolites, especially the large pore synthetic faujasites, zeolites X and Y.

Typical feeds to a catalytic cracker can generally be characterized as being a relatively high boiling oil or residuum, either on its own, or mixed with other fractions, also usually of a relatively high boiling point. The most common feeds are gas oils, that is, high boiling, non-residual oils, with an initial boiling point usually above about 230°C, more commonly above about 350°C, with end points of up to about 620°C. Typical gas oils include straight run (atmospheric) gas oil, vacuum gas oil, and coker gas oils.

While such conventional fluid catalytic cracking processes are suitable for producing conventional transportation fuels, such fuels are generally unable to meet the more demanding requirements of low emissions fuels. To meet low emissions standards, the fuel products must be relatively low in sulfur and nitrogen. Furthermore, to augment the volume of low emission fuels, it is desirable to increase the amounts of light olefins such as propylene, iso- and normal butylenes, and isoamylene. The propylene, isobutylene, and isoamylene can be reacted with methanol to form methyl-propyl-ethers, methyl tertiary butyl ether (MTBE), and tertiary amyl methyl ether (TAME). These are high octane blending components which can be added to gasoline to satisfy oxygen requirements mandated by legislation. In addition to enhancing the volume and octane number of gasoline, they also reduce emissions. Ethylene, which can also be increased, is valuable as a chemical raw material. Conventional fluid catalytic cracking does not produce large enough quantities of these light olefins. Also, the fuels are not low enough in sulfur and nitrogen content to meet such standards. These standards will require either further changes in the FCC process, catalysts, or post-treating of all FCC products. Since post-treating to remove aromatics from gasoline or distillate fuels is particularly expensive, there are large incentives to limit the production of aromatics in the FCC process. Consequently, there exits a need in the art for methods of producing larger quantities of light olefins and low emissions transportation fuels, such as gasoline and distillates.

US-A-3 856 659 and US-A-4 865 718 both describe fluid catalytic processes which produce light olefins from a hydrocarbonaceous feedstock by employing a cracking catalyst having two components, viz a ZSM-5 zeolite component and a zeolite Y component. The processes described involve a plurality of stages, at least one of which occurs with the catalyst entity being in a form which is a modification of the original catalyst entity.

In accordance with the present invention, a fluid catalytic cracking process for producing light olefins and low emissions fuels which process is characterized in that a hydrocarbonaceous feedstock is fed to a reaction zone and that feedstock is cracked therein in contact with a cracking catalyst mixture; the said catalyst mixture is then circulated from that reaction zone to a stripping zone, from which zone the said catalyst mixture is returned to the said reaction zone for the cracking therein of more of the said feedstock;
and which process is further characterized in that (a) the said catalyst mixture employed for the cracking and which is then circulated as aforesaid comprises an effective amount of a zeolite-Y component and a ZSM-5 zeolitic component in a porous matrix, (b) the hydrocarbonaceous feedstock has an initial boiling point in the range of from 230 to 350°C and an end point of up to 620°C, a nitrogen content not exceeding 1500 wppm, and a hydrogen content of at least 12 wt.%; (b) the feedstock is contacted with the cracking catalyst mixture in the reaction zone for a contact time in the range of from 0.5 to 5 seconds and is catalytically cracked in the reaction zone at a temperature in the range of from 450 to 700°C, thereby producing lower boiling olefin-containing products, the catalyst mixture having deposited thereon coke and hydrocarbonaceous material; (c) the partially coked catalyst mixture is stripped with a stripping medium in the stripping zone to remove therefrom at least a portion of said hydrocarbonaceous material; (d) the said removed hydrocarbonaceous material is recovered from the stripping zone; (e) the stripped coke catalyst mixture is regenerated in the regeneration zone by burning-off a substantial amount of the coke on said catalyst mixture optionally with an added fuel component, to maintain the regenerated catalyst mixture at a temperature which will maintain the reaction zone at a temperature in the range of from 450 to 700°C; and (f) the regenerated catalyst mixture is circulated to the reaction zone.

In preferred embodiments of the present invention, the added fuel component in the regeneration zone is selected from: C₂⁻ saturated light gases from the catalytic cracking unit, and natural gas.

### Detailed Description of the Invention

Feedstocks which are suitable for being converted in accordance with the present invention are any of those hydrocarbonaceous feedstocks which are conventional feedstocks for fluid catalytic cracking and which have an initial boiling point of 230°C to 350°C, with an end point up to 620°C. The feedstocks of the present invention must also contain no more than 1500 wppm nitrogen, and at least 12 wt.% hydrogen. Non-limiting examples of such feeds include the non-residual petroleum based oils such as straight run (atmospheric) gas oil, vacuum gas oil, and coker gas oil. Oils from synthetic sources such as coal liquefaction, shale oil, or other synthetic processes may also yield high boiling fractions which may be catalytically cracked, either on their own or in admixture with oils of petroleum origin. Feedstocks which are suitable for use in the practice of the present invention may not be readily available in a refinery. This is because typical refinery streams in the boiling point range of interest, and which are conventionally used for fluid catalytic cracking, generally contain too high a content of undesirable components such as nitrogen, sulfur, and aromatics. Consequently, such streams will need to be upgraded, or treated to lower the level of such undesirable components. Non-limiting methods for upgrading such streams include hydrotreating in the presence of hydrogen and a supported Mo containing catalyst with Ni and/or Co; extraction methods, including solvent extraction as well as the use of solid absorbents, such as various molecular sieves. It is preferred to hydrotreat the streams.

Any suitable conventional hydrotreating process can be used as long as it results in a stream having the characteristics of nitrogen, sulfur, and aromatics level as previously mentioned. That is nitrogen levels of no more than 1500 wppm, preferably less than 1000 wppm, more preferably less than 500 wppm, and most preferably less that 100 wppm; a hydrogen content of at least 12 wt.%, preferably greater than 12.5 wt.%.

Suitable hydrotreating catalysts are those which are typically comprised of a Group VIB (according to the Sargent-Welch Scientific Company Periodic Table of the Elements) metal with one or more Group VIII metals as promoters, on a refractory support. It is preferred that the Group VIB metal be molybdenum or tungsten, more preferably molybdenum. Nickel and cobalt are the preferred Group VIII metal with alumina being the preferred support. The Group VIII metal is present in an amount ranging from 2 to 20 wt.%, expressed as the metal oxides, preferably from 4 to 12 wt.%. The Group VIB metal is present in an amount ranging from 5 to 50 wt.%, preferably from 10 to 40 wt.%, and more preferably from 20 to 30 wt.%. All metals weight percents are based on total weight of catalyst. Any suitable refractory support can be used. Such supports are typically inorganic oxides, such as alumina, silica, silica-alumina, titania, and the like. Preferred is alumina.

Suitable hydrotreating conditions include temperatures ranging from 250° to 450°C, preferably from 350°C to 400°C; pressures from 17.24 to 206.90 bar gauge (250 to 3000 psig); preferably from 103.45 to 172.40 bar gauge (1500 to 2500 psig); hourly space velocities from 0.05 to 6 V/V/Hr; and a hydrogen gas rate of 88.95 to 1778.93 m³/m³ Feed (500 to 10000 SCF/B); where SCF/B means standard cubic feet per barrel, and V/V/Hr means volume of feed per volume of the catalyst per hour.

A hydrocarbonaceous feedstock which meets the aforementioned requirements for producing light olefins and a low emissions fuel is fed to a conventional fluid catalytic cracking unit. The catalytic cracking process may be carried out in a fixed bed, moving bed, ebullated bed, slurry, transfer line (dispersed phase), riser or dense bed fluidized bed operation. It is preferred that the catalytic cracking unit be a fluid catalytic cracking (FCC) unit. Such a unit will typically contain a reactor where the hydrocarbonaceous feedstock is brought into contact with hot powdered catalyst particles which were heated in a regenerator. Transfer lines connect the two vessels for moving catalyst particles back and forth. The cracking reaction will preferably be carried out at a temperature from 450° to 700°C, more preferably from 480° to 650°C; pressures from 0.345 to 4.140 bar gauge (5 to 60 psig), more preferably from 0.345 to 2.760 bar gauge (5 to 40 psig); contact times (catalyst in contact with feed) of 0.5 to 15 seconds, more preferably 1 to 6 seconds; and a catalyst to oil ratio of 0.5 to 10, more preferably from 2 to 8. During the cracking reaction, lower boiling products are formed and some hydrocarbonaceous material, and non-volatile coke are deposited on the catalyst particles. The hydrocarbonaceous material is removed by stripping, preferably with steam. The non-volatile coke is typically comprised of highly condensed aromatic hydrocarbons which generally contain 4 to 10 wt.% hydrogen. As hydrocarbonaceous material and coke build up on the catalyst, the activity of the catalyst for cracking, and the selectivity of the catalyst for producing gasoline blending stock, is diminished. The catalyst particles can recover a major proportion of their original capabilities by removal of most of the hydrocarbonaceous material by stripping and combustion of the coke by a suitable oxidative regeneration process. Consequently, the catalyst particles are sent to a stripper and then to a regenerator.

Catalyst regeneration is accomplished by burning the coke deposits from the catalyst surface with an oxygen-containing gas such as air. Catalyst temperatures during regeneration may range from 560°C to 760°C. The regenerated, hot catalyst particles are then transferred back to the reactor via a transfer line and, because of their heat content, are able to maintain the reactor at the temperature necessary for the cracking reactions. Coke burn-off is an exothermic reaction, therefore in a conventional fluid catalytic cracking unit with conventional feeds, no additional fuel needs to be added. The feedstocks used in the practice of the present invention, primarily because of their low levels of aromatics, and also due to the relatively short contact times in the reactor or transfer line, may not deposit enough coke on the catalyst particles to achieve the necessary temperatures in the regenerator. Therefore, it may be necessary to use an additional fuel to provide increased temperatures in the regenerator so the catalyst particles returning to the reactor are hot enough to maintain the cracking reactions. Non-limiting examples of suitable additional fuel include C₂⁻ saturated gases from the catalytic cracking process itself; natural gas; and any other non-residual petroleum refinery stream in the appropriate boiling range. Such additional fuels are sometimes referred to as torch oils. Preferred are the C₂⁻ gases.

Catalysts suitable for use in the present invention are mixtures of zeolite-Y and ZSM-5 in a porous matrix material. The zeolite portion of the mixture will typically contain from about 5 wt.% to 95 wt.% zeolite-Y and the balance being of the zeolite being ZSM-5. By zeolite-Y is meant those zeolites which are isostructural with zeolite-Y, or faujasite, and have a steamed (16 hours at 1400°F) or equilibrated unit cell size equal to or less than 2.435 nm (24.35 Å). The preferred unit cell size is from 2.421 to 2.430 nm (24.21 to 24.30 Å). The particle size of the zeolite may range from about 0.1 to 10 microns, preferably from about 0.3 to 3 microns. The zeolite will be mixed with a suitable porous matrix material when used as a catalyst for fluid catalytic cracking. Non-limiting porous matrix materials which may be used in the practice of the present invention include alumina, silica-alumina, silica-magnesia, silica-zirconia, silica-thoria, silica-berylia, silica-titania, as well as ternary compositions, such as silica-alumina-thoria, silica-alumina-zirconia, magnesia and silica-magnesia-zirconia. The matrix may also be in the form of a cogel. The relative proportions of zeolite component and inorganic oxide gel matrix on an anhydrous basis may vary widely with the zeolite content, ranging from about 10 to 99, more usually from about 10 to 80, percent by weight of the dry composite. The matrix itself may possess catalytic properties, generally of an acidic nature.

Suitable amounts of zeolite component in the total catalyst will generally range from about 1 to about 60, preferably from about 1 to about 40, and more preferably from about 5 to about 40 wt.%, based on the total weight of the catalyst. Generally, the particle size of the total catalyst will range from about 10 to 300 microns in diameter, with an average particle diameter of about 60 microns. The surface area of the matrix material will be about ≤ 350 m²/g, preferably 100 m²/g, more preferably from about 50 to 100 m²/g. While the surface area of the final catalysts will be dependent on such things as type and amount of zeolite material used, it will usually be less than about 500 m²/g, preferably from about 50 to 300 m²/g, more preferably from about 50 to 250 m²/g, and most preferably from about 100 to 250 m²/g.

The following examples are presented to illustrate preferred embodiments of the present invention and should not be taken as being limiting in any way.

### Example 1 (Comparative)

Cracking tests were conducted in a fixed bed microactivity (MAT) testing unit. Such a test unit is described in the Oil and Gas Journal, 1966 Vol.64, pages 7, 84, 85 and November 22, 1971, pages 60-68, which is incorporated herein by reference. Run conditions are listed as follows:

| | |
|---|---|
| Temperature, °C | 527 |
| Run Time, Sec. | 30 |
| Catalyst Charge, gr. | 4.1 to 7.5 |
| Amount Feed, cc. | 1.5 |
| Cat/Oil ratio | 3.0 to 5.5 |

The feed for these tests was a conventional, commercially distilled VGO used as a commercial FCC feed. This FCC feed is designated by RA and had a sulfur content of 2.09%, a nitrogen content of 0.0671%, and a hydrogen content of 12.03%.

Two catalysts were used in these tests. The first was a commercial equilibrium catalyst initially containing about 30% USY (ultrastable zeolite Y), which is designated as catalyst ZA. The other catalyst was a fresh steamed ZSM-5 (Intercat's ZCAT+) which contains about 15% ZSM-5 zeolite in a silica-alumina matrix. This ZSM-5 catalyst was designated ZZ.

The total liquid product from the MAT tests which amounted to about 0.3 to 0.7 grams, was analyzed on two different GC instruments. A standard analysis is the boiling point distribution determined by gas chromatographic distillation (GCD) to evaluate: (1) the amount of material boiling less than 15°C; (2) naphtha between 15°C and 220°C; (3) light cat cycle oil (LCCO) boiling between 220°C and 345°C; and (4) bottoms boiling above 345°C.

Detailed cracking data are given in Table I below for cracking the conventional VGO feed with catalyst ZA alone and with a mixture of catalysts 92 wt.% ZA and 8 wt.% ZZ. The comparative data of Table I was made at a constant coke yield of 4 wt% on feed, reflecting the need to heat balance commercial fluid catalytic cracking units.

**TABLE I**

| Catalyst | ZA (comparative) | ZA+ZZ (invention) |
|---|---|---|
| Catalyst/Oil Ratio | 5.2 | 5.1 |
| Conversion (220°C) | 65.8 | 65.8 |

| Yields,Wt% | | |
|---|---|---|
| Coke | 4.0 | 4.0 |
| C₂⁻ Dry Gas | 2.7 | 2.9 |
| C₂H₄ | 0.74 | 0.95 |
| C₃H₆ | 4.1 | 8.4 |
| C₃H₈ | 0.9 | 1.4 |
| C₄H₈ | 5.1 | 7.6 |
| Iso C₄H₁₀ | 3.2 | 4.8 |
| N-C₄H₁₀ | 1.0 | 0.8 |
| 15/220°C | 44.9 | 36.0 |
| LCCO | 19.7 | 18.3 |
| Bottoms | 14.5 | 15.9 |

These results show the expected appreciable increase in propylene and butylene yields for using a modest amount of ZSM-5 catalyst with a conventional fluid cracking catalyst at conventional fluid catalytic cracking conditions. These olefins are produced at the expense of 15/220°C naphtha yields. Note also that C₂⁻ dry gas yields are not substantially boosted by use of the ZSM-5 catalyst at this level. Finally, the bottoms yield was higher with use of the ZSM-5 catalyst. ZSM-5 addition in conventional fluid catalytic cracking operations must be limited to prevent larger increases in these undesirable 345°C+ products.

This example shows that adding conventional levels of ZSM-5 additive to a conventional fluid catalytic cracking operation does not significantly increase ethylene yields.

### Example 2

Further cracking tests were conducted in the microactivity test unit of Example 1 above. The catalytic cracking conditions used for this example were substantially the same as those described in Example 1 except that a higher temperature of 566°C was used. The feed used for these experiments was a commercially hydrotreated, VGO catalytic cracking feed. This feed is designated Feed HA and its properties are given below.

| **HA Feed Properties** | |
|---|---|
| Wppm N | 1210 |
| Wt% S | 0.249 |
| Wt% C | 87.19 |
| Wt% H | 12.43 |
| Wt% Con Carbon* | 0.19 |

| | |
|---|---|
| *Conradson carbon content as defined in ASTM D-189-65 | |

Two catalysts were used in this example. The first was a fresh, steamed, commercially available catalyst (Davison's Octacat 50+) which is an ultra stable Y zeolite in a silica matrix. This catalyst is designated herein as catalyst ZB. It was steamed 16 hours at 760°C to simulate commercially deactivated catalysts. It has a relatively low unit cell size after steaming, or commercial deactivation. Tests were also made with a fresh, steamed ZSM-5 catalyst of Example 1 above. This catalyst is designated as Catalyst ZW. The characteristics of both catalysts are set forth below.

| Catalyst | ZB | ZW |
|---|---|---|
| **Wt%** | | |
| Al₂O₃ | 25.5 | 35.31 |
| SiO₂ | 73.0 | 53.96 |
| RE₂O₃ | 0.57 | 0.0 |
| Na₂O | 0.20 | 0.2 |
| TiO₂ | 0.67 | n/a |

| Calc. 4 hrs @ 537°C | | |
|---|---|---|
| S.A., M²/g | 271.0 | 34.0 |
| P.V., cc/g | 0.173 | 0.068 |
| Unit Cell, A | 24.47 | n/a |

| Steamed 16 hrs @ 760°C | | |
|---|---|---|
| S.A., M²/g | 230.0 | 46.0 |
| P.V., cc/g | 0.154 | 0.061 |
| Unit Cell, A | 24.26 | n/a |

Tests were made with catalyst ZB alone and with mixtures of 60 wt.% ZW and 40 wt.% ZB at catalytic cracking conditions similar to tne conditions used in Example 1. The tests were made at a 3 to 6 catalyst to oil ratio. Detailed cracking data are given in Table II below for cracking the hydrotreated VGO feed HA at 566°C and at a constant coke yield of 4 wt% on feed.

**TABLE II**

| Catalyst | ZB (comparative) | 40 wt. %ZB+ 60 wt.% ZW (invention) |
|---|---|---|
| Catalyst/Oil Ratio | 4.6 | 7.0 |
| Conversion (220°C) | 73.8 | 74.7 |

| Yields,Wt% | | |
|---|---|---|
| Coke | 4.0 | 4.0 |
| C₂⁻ Dry Gas | 4.4 | 6.7 |
| C₂H₄ | 1.37 | 4.45 |
| C₃H₆ | 6.6 | 17.8 |
| C₃H₈ | 1.6 | 2.7 |
| C₄H₈ | 7.6 | 13.8 |
| Iso-C₄H₁₀ | 4.2 | 4.2 |
| N-C₄H₁₀ | 0.8 | 1.0 |
| 15/220°C | 44.8 | 24.3 |
| LCCO | 16.6 | 14.0 |
| Bottoms | 9.7 | 11.3 |

These results show that cracking a relatively clean catalytic cracking feed at relatively high temperatures with catalyst mixtures containing 60 wt.% ZSM-5 not only boosts the C₃ and C₄ olefin yields, but also boosts ethylene yields. Yields of C₂- dry gas increased, but the increase was all ethylene. Yields of saturated C₂-dry gas are actually lower than with catalyst ZB alone.

These results are unexpected in view of the results at lower catalytic cracking temperatures with lower levels of ZSM-5. It is also unexpected that conversion to 345°C and 220°C⁻ products were maintained, at a higher catalyst to oil ratio, using higher levels of ZSM-5. This is apparently due to a low coke producing factor for the additive itself at these conditions. In any event, these results show that high conversions can be obtained in heat balanced fluid catalytic cracking operations with catalyst mixtures containing relatively high levels of ZSM-5 additive. This is accomplished at high cracking temperatures with relatively clean feeds.

### Example 3

Further cracking tests were conducted in the microactivity unit used in the above examples. The feed and catalysts were the same as in Example 2. The catalytic cracking conditions were substantially the same as the conditions used in Example 1 except that a higher cracking temperature, 621°C, was used. This example represents a preferred embodiment of the present invention.

Detailed cracking data are given in Table III below for cracking the hydrotreated VGO feed HA at a constant coke yield of 4 wt% on feed.

**TABLE III**

| Catalyst | ZB (comparative) | 40 w.%ZB + 60 w.% ZW (invention) |
|---|---|---|
| Catalyst/Oil Ratio | 3.8 | 6.0 |
| Conversion (220°C) | 75.3 | 75.9 |

| Yields,Wt% | | |
|---|---|---|
| Coke | 4.0 | 4.0 |
| C₂⁻ Dry Gas | 9.0 | 11.4 |
| C₂H₄ | 3.30 | 7.10 |
| C₃H₆ | 8.2 | 21.3 |
| C₃H₈ | 2.0 | 2.6 |
| C₄H₈ | 10.0 | 13.3 |
| Iso-C₄H₁₀ | 2.4 | 2.2 |
| N-C₄H₁₀ | 0.4 | 0.5 |
| 15/220°C | 39.3 | 20.6 |
| LCCO | 13.9 | 12.8 |
| Bottoms | 10.8 | 11.3 |

Comparing these results with Example 2 shows that increasing cracking temperatures to 621°C from 566°C resulted in modest increases in light olefins yields produced with catalyst ZB alone. However, the ZSM-5 additive ZW had even more impact on light olefins at the higher temperature. Ethylene yields were boosted to 3.8 wt% vs a 3% boost at 566°C. Since the ZSM-5 additive boosted dry gas yields by only 2.4% C₂⁻ saturate yields were reduced by the additive. Additive ZW also boosted propylene yields by more than 13% vs an 11% increase at 566°C. On the other hand, the additive produced less butylene at 621° than at 566°C, suggesting C₄ olefins were recracked to produce lighter olefins at the higher temperature.

### Example 4

Further cracking tests were conducted in the same small fixed bed, MAT type testing unit which was described in Example 1 above. Feed and catalysts were the same as in Example 2. Catalytic cracking conditions used for these tests were similar to the conditions used in Example 3. However, some tests were made at higher cracking temperatures, while others were made at even higher catalyst to oil ratios. This example illustrates a preferred method for increasing light olefins yields.

Detailed cracking data are given in Table IV below for these more severe cracking conditions.

**TABLE IV**

| **Higher Severity Cracking of Hydrotreated VGO HA on 40% ZB/60%ZW** | | | |
|---|---|---|---|
| Cracking Temperature, °C | 620 | 650 | 675 |
| Catalyst/Oil Ratio | 15 | 6.0 | 6.1 |
| Conversion (220°C) | 81.7 | 79.0 | 79.5 |

| Yields,Wt% | | | |
|---|---|---|---|
| Coke | 9.9 | 5.7 | 7.2 |
| C₂⁻ Fry Gas | 17.7 | 17.4 | 22.5 |
| C₂H₄ | 9.54 | 9.73 | 11.76 |
| C₃H₆ | 20.1 | 22.3 | 20.9 |
| C₃H₈ | 4.2 | 3.1 | 2.7 |
| C₄H₈ | 10.2 | 11.7 | 10.1 |
| Iso-C₄H₁₀ | 3.2 | 2.1 | 0.9 |
| N-C₄H₁₀ | 1.0 | 0.6 | 0.5 |
| 15/430°C | 15.2 | 15.9 | 14.4 |
| LCCO | 10.4 | 11.4 | 10.5 |
| Bottoms | 7.9 | 9.6 | 9.9 |

Comparing these results with Example 3 shows that increasing cracking severity by boosting cracking temperatures is preferred to increasing cat to oil ratio. Higher C/O ratios and higher cracking temperatures boost conversion and ethylene yields. However, increasing cat to oil ratio results in higher coke yields than those resulting from higher cracking temperatures. Increasing cat to oil ratio also tends to produce more propane and butane vs. propylene and butylene.

### Example 5

Further cracking tests were conducted in the same small fixed bed, MAT type testing unit which was described in Example 1 above. Feed and catalysts were the same as in Example 2. Catalytic cracking conditions used for these tests were similar to the conditions used in Example 4 above. However, all tests were made at a cracking temperature of 650°C and a catalyst to oil ratio of 6. In these tests, the proportion of additive ZW ranged from 70 to 100% as compared to the 60% additive level used in Examples 3 and 4. This example illustrates a preferred ZSM-5 additive to cracking catalyst ratio.

Detailed cracking data are given in Table V below for these experiments with even higher additive levels.

**Table V**

| High Temperature Cracking of Hydrotreated VGO HA with Higher Additive "ZW": Catalyst ZB Ratios | | | | |
|---|---|---|---|---|
| Wt% Additive ZW | 70 | 80 | 90 | 100 |
| Conversion (220°C) | 77.0 | 77.4 | 74.3 | 63.0 |

| Yields,Wt% | | | | |
|---|---|---|---|---|
| Coke | 4.7 | 4.3 | 3.4 | 3.7 |
| C₂⁻ Dry Gas | 17.5 | 18.3 | 17.5 | 17.3 |
| C₂H₄ | 10.9 | 11.1 | 10.7 | 10.0 |
| C₃H₆ | 21.5 | 22.1 | 22.7 | 17.5 |
| C₃H₈ | 2.9 | 2.8 | 2.5 | 1.9 |
| C₄H₈ | 11.0 | 11.5 | 11.8 | 8.4 |
| Iso-C₄H₁₀ | 1.9 | 1.0 | 1.1 | 0.5 |
| N-C₄H₁₀ | 0.6 | 0.7 | 0.4 | 0.3 |
| 15/220°C | 16.9 | 16.3 | 14.5 | 13.0 |
| LCCO | 12.0 | 11.9 | 12.2 | 14.0 |
| Bottoms | 11.0 | 10.7 | 13.6 | 23.0 |

Comparing these results with Example 4, shows that increasing the level of Additive ZW from 60 to 80 or 90% provided higher ethylene yields and lower coke yields, while maintaining conversion, propylene and butylene yields. Further increases in additive ZW levels, along with further reductions in catalyst ZB levels, resulted in significant reductions in conversion to 220°C⁻ and particularly 345°C⁻ products.

## Claims

1. A fluid catalytic cracking process for producing light olefins and low emissions fuels products,
which process is characterized in that a hydrocarbonaceous feedstock is fed to a reaction zone and that feedstock is cracked therein in contact with a cracking catalyst mixture; the said catalyst mixture is then circulated from that reaction zone to a stripping zone, from which zone the said catalyst mixture is circulated to a regeneration zone, from which zone the said catalyst mixture is returned to the said reaction zone for the cracking therein of more of the said feedstock;
and which process is further characterized in that (a) the said catalyst mixture employed for the cracking and which is then circulated as aforesaid comprises an effective amount of a zeolite-Y component and a ZSM-5 zeolitic component in a porous matrix; (b) the hydrocarbonaceous feedstock has an initial boiling point in the range of from 230 to 350°C and an end point of up to 620°C, a nitrogen content not exceeding 1500 wppm, and a hydrogen content of at least 12 wt.%; (b) the feedstock is contacted with the cracking catalyst mixture in the reaction zone for a contact time in the range of from 0.5 to 5 seconds and is catalytically cracked in the reaction zone at a temperature in the range of from 450 to 700°C, thereby producing lower boiling olefin-containing products, the catalyst mixture having deposited thereon coke and hydrocarbonaceous material; (c) the partially coked catalyst mixture is stripped with a stripping medium in the stripping zone to remove therefrom at least a portion of said hydrocarbonaceous material; (d) the said removed hydrocarbonaceous material is recovered from the stripping zone; (e) the stripped coked catalyst mixture is regenerated in the regeneration zone by burning-off a substantial amount of the coke on said catalyst mixture, optionally with an added fuel component, to maintain the regenerated catalyst mixture at a temperature which will maintain the reaction zone at a temperature in the range of from 450 to 700°C; and (f) the regenerated catalyst mixture is circulated to the reaction zone.

2. The process of claim 1 wherein the catalyst contains from 2.5 wt.% to 57.5 wt.% zeolite-Y component.

3. The process of claim 2 wherein the catalyst contains from 12 wt.% to 24 wt.% zeolite-Y component.

4. The process of any one of claims 1 to 3 wherein the catalyst contains from 57.5 wt.% to 2.5 wt.% ZSM-5 zeolitic component.

5. The process of claim 4 wherein the catalyst contains from 8 wt.% to 15 wt.% ZSM-5 zeolitic component.

6. The process of any one of claims 1 to 5 wherein the hydrocarbonaceous feedstock contains less than 1000 wppm nitrogen, e.g., less than 500 wppm nitrogen.

7. The process of any one of claims 1 to 6 wherein the feedstock contains more than 12.5 wt.% hydrogen.

8. The process of any one of claims 1 to 7 wherein the non-zeolitic portion of the catalyst comprises an amorphous silica-alumina material containing from 15 to 25 wt.% alumina.

9. The process of any one of claims 1 to 8 wherein the catalyst is zeolitic material in an inorganic matrix, which zeolitic material is a Y type zeolite component having a unit cell size of 2.435 nm (24.35 Å) or less.

10. The process of any one of claims 1 to 9 wherein the hydrocarbonaceous feedstock has been subjected to a catalytic hydrotreating at conditions within the following ranges: temperature from 250 to 400°C; pressure from 250 to 3000 psig (17.24 to 206.90 bar gauge); space velocity from 0.05 to 6 v/v/h; hydrogen gas rate from 500 to 10000 SCF/B (88.95 to 1778.93 m³H₂/m³ feed).

## Patentansprüche

1. Katalytisches Fließbettcrackverfahren zur Herstellung von leichten Olefinen und von Brennstoffprodukten mit niedrigen Emissionen,
das dadurch gekennzeichnet ist, dass ein kohlenwasserstoffhaltiges Einsatzmaterial in eine Reaktionszone eingespeist wird und das Einsatzmaterial darin in Kontakt mit einer Crackkatalysatormischung gecrackt wird, die Katalysatormischung dann von der Reaktionszone zu einer Strippingzone geführt wird, die Katalysatormischung von dieser Zone zu einer Regenerationszone geführt wird, die Katalysatormischung von dieser Zone zu der Reaktionszone für das darin erfolgende Cracken von mehr Einsatzmaterial zurückgeführt wird,
und weiter dadurch gekennzeichnet ist, dass (a) die für das Cracken eingesetzte Katalysatormischung, die danach wie zuvor angegeben im Kreis geführt wird, eine wirksame Menge einer Zeolith-Y-Komponente und einer ZSM-5-zeolithischen Komponente in einer porösen Matrix enthält, (b) das kohlenwasserstoffhaltige Einsatzmaterial einen Anfangssiedepunkt im Bereich von 230 bis 350 °C und einen Endpunkt von bis 620 °C, einen Stickstoffgehalt von nicht mehr als 1500 wppm, und einen Wasserstoffgehalt von weniger als 12 Gew.-% hat, (b) das Einsatzmaterial mit der Crackkatalysatormischung in der Reaktionszone während einer Kontaktzeit im Bereich von 0,5 bis 5 Sekunden in Kontakt gebracht wird und in der Reaktionszone bei einer Temperatur im Bereich von 450 bis 700 °C katalytisch gecrackt wird, wodurch niedrigsiedende Olefinenthaltende Produkte hergestellt werden, wobei die Katalysatormischung auf ihr abgeschiedenen Koks und kohlenwasserstoffhaltiges Material aufweist, (c) die teilweise verkokte Katalysatormischung mit einem Strippingmedium in der Strippingzone gestrippt wird, um aus ihr mindestens einen Teil des kohlenwasserstoffhaltigen Materials zu entfernen, (d) das entfernte kohlenwasserstoffhaltige Material aus der Strippingzone gewonnen wird, (e) die gestrippte verkokte Katalysatormischung in der Regenerationszone durch Abbrennen einer wesentlichen Menge des Koks auf der Katalysatormischung regeneriert wird, gegebenenfalls zusammen mit zugefügter Brennstoffkomponente, um die regenerierte Katalysatormischung bei einer Temperatur zu halten, die die Reaktionszone bei einer Temperatur im Bereich von 450 bis 700 °C hält, und (f) die regenerierte Katalysatormischung zu der Reaktionszone zurückgeführt wird.

2. Verfahren nach Anspruch 1, bei dem der Katalysator 2,5 bis 57,5 Gew.-% Zeolith-Y-Komponente enthält.

3. Verfahren nach Anspruch 2, bei dem der Katalysator 12 Gew.-% bis 24 Gew.-% Zeolith-Y-Komponente enthält.

4. Verfahren nach einem der Ansprüche 1 bis 3, bei dem der Katalysator 57,5 Gew.-% bis 2,5 Gew.-% ZSM-5-zeolithische Komponente enthält.

5. Verfahren nach Anspruch 4, bei dem der Katalysator 8 Gew.-% bis 15 Gew.-% ZSM-5-zeolithische Komponente enthält.

6. Verfahren nach einem der Ansprüche 1 bis 5, bei dem das kohlenwasserstoffhaltige Einsatzmaterial weniger als 1000 wppm Stickstoff, z.B. weniger als 500 wppm Stickstoff, enthält.

7. Verfahren nach einem der Ansprüche 1 bis 6, bei dem das Einsatzmaterial mehr als 12,5 Gew.-% Wasserstoff enthält.

8. Verfahren nach einem der Ansprüche 1 bis 7, bei dem der nicht-zeolithische Teil des Katalysators ein amorphes Siliciumoxid-Aluminiumoxid-Material aufweist, welches 15 bis 25 Gew.-% Aluminiumoxid enthält.

9. Verfahren nach einem der Ansprüche 1 bis 8, bei dem der Katalysator zeolithisches Material in einer anorganischen Matrix ist, wobei das zeolithische Material eine Y-Typ-Zeolithkomponente mit einer Elementarzellengröße von 2,435 nm (24,35 Å) oder weniger ist.

10. Verfahren nach einem der Ansprüche 1 bis 9, bei dem das kohlenwasserstoffhaltige Einsatzmaterial katalytischem Hydrotreating bei Bedingungen innerhalb der folgenden Bereiche unterworfen worden ist: Temperatur von 250 bis 400 °C; Druck von 250 bis 3000 psig (17,24 bis 206,90 bar Überdruck); stündlicher Volumendurchsatz von 0,05 bis 6 v/v/h; Wasserstoffgasgeschwindigkeit von 500 bis 10 000 SCF/B (88,95 bis 1778,93 m³H₂/m³ Einsatzmaterial).

## Revendications

1. Procédé de craquage catalytique en lit fluidisé pour la production d'oléfines légères et de produits carburants à faibles émissions, ledit procédé étant caractérisé en ce qu'une charge d'alimentation hydrocarbonée est acheminée à une zone réactionnelle et en ce que cette charge d'alimentation y est craquée en contact avec un mélange de catalyseurs de craquage; en ce que ledit mélange de catalyseurs est ensuite acheminée de cette zone réactionnelle à une zone d'extraction, d'où ledit mélange de catalyseurs est acheminé à une zone de régénération, d'où ledit mélange de catalyseurs est renvoyé à ladite zone de réaction pour y cracker une quantité supplémentaire de ladite charge d'alimentation; et
ledit procédé étant par ailleurs caractérisé en ce que (a) ledit mélange de catalyseurs utilisé pour le craquage et qui est mis en circulation ensuite comme mentionné ci-dessus comprend une quantité efficace d'un composant de zéolite Y et d'un composant de zéolite ZSM-5 dans une matrice poreuse, (b) la charge d'alimentation hydrocarbonée a un point d'ébullition initial dans la plage de 230 à 350°C et un point terminal jusqu'à 620°C, une teneur en azote ne dépassant pas 1500 ppm en poids et une teneur en hydrogène d'au moins 12% en poids; (c) la charge d'alimentation est mise en contact avec le mélange de catalyseurs de craquage dans la zone réactionnelle pendant une période de contact dans la plage de 0,5 à 5 secondes et est craquée catalytiquement dans la zone réactionnelle à une température dans la plage de 450 à 700°C, obtenant ainsi des produits contenant des oléfines à moindre point d'ébullition, le mélange de catalyseurs ayant reçu un dépôt de coke et de matériau hydrocarboné; (d) le mélange de catalyseurs partiellement cokéfiés est soumis à une extraction avec un agent d'extraction dans la zone d'extraction pour en éliminer au moins une partie dudit matériau hydrocarboné; (e) ledit matériau hydrocarboné éliminé est récupéré de la zone d'extraction; (f) le mélange de catalyseurs cokéfiés soumis à extraction est régénéré dans la zone de régénération en brûlant une quantité sensible du coke sur ledit mélange de catalyseurs, éventuellement avec un composant de carburant ajouté, pour maintenir le mélange de catalyseurs régénérés à une température qui maintiendra la zone réactionnelle à une température dans la plage de 450 à 700°C; et (g) le mélange de catalyseurs régénérés est acheminé vers la zone réactionnelle.

2. Procédé selon la revendication 1, dans lequel le catalyseur contient 2,5% en poids à 57,5% en poids de composant de zéolite Y.

3. Procédé selon la revendication 2, dans lequel le catalyseur contient 12% en poids à 24% en poids de composant de zéolite Y.

4. Procédé selon l'une quelconque des revendications 1 à 3, dans lequel le catalyseur contient 57,5% en poids à 2,5% en poids de composant de zéolite ZSM-5.

5. Procédé selon la revendication 4, dans lequel le catalyseur contient 8% en poids à 15% en poids de composant de zéolite ZSM-5.

6. Procédé selon l'une quelconque des revendications 1 à 5, dans lequel la charge d'alimentation hydrocarbonée contient moins de 1000 ppm en poids d'azote, par exemple moins de 500 ppm en poids d'azote.

7. Procédé selon l'une quelconque des revendications 1 à 6, dans lequel la charge d'alimentation contient plus de 12,5% en poids d'hydrogène.

8. Procédé selon l'une quelconque des revendications 1 à 7, dans lequel la partie non zéolitique du catalyseur comprend un matériau de silice-alumine amorphe contenant 15 à 25% en poids d'alumine.

9. Procédé selon l'une quelconque des revendications 1 à 8, dans lequel le catalyseur est un matériau zéolitique dans une matrice inorganique, ledit matériau zéolitique étant un composant de zéolite de type Y ayant une taille de cellule unitaire de 2,435 nm (24,35 angströms) ou moins.

10. Procédé selon l'une quelconque des revendications 1 à 9, dans lequel la charge d'alimentation hydrocarbonée a été soumise à un hydrotraitement catalytique dans des conditions dans les plages suivantes : température de 250 à 400°C; pression manométrique de 17,24 à 206,90 bars (250 à 3000 psig); vitesse spatiale de 0,05 à 6 v/v/h; débit de gaz hydrogène de 88,95 à 1778,93 m³H₂/m³ de charge d'alimentation (500 à 10 000 SCF/B).
